# EUROPEAN PATENT APPLICATION

(11) **EP 1 306 007 A1**
(43) Date of publication of application: **02.05.2003**
(21) Application number: 02022990.2
(22) Date of filing: 15.10.2002
(51) Int. Cl.: A01N 43/80

(54) **Compositions and method to safen crops from injury caused by uracil-substituted benzisothiazoles**

(30) Priority: 19.10.2001 US 343566 P
(71) Applicant: BASF AKTIENGESELLSCHAFT, 67056 Ludwigshafen (DE)
(72) Inventor: Tucker, Wayne Lynn, Philo, IL 61864 (US); White, Randall H., Newtown, PA (US); Ortlip, Charles L., Durham, NC 27703 (US)

(57) **Abstract**

The present invention describes safened herbicidal compositions, including their methods of use. The herbicidal compositions include an herbicidally effective amount of a benzisothiazole herbicide and an antidotally effective amount of a safener. The benzisothiazole herbicide has the formula (I) (including agronomically acceptable salts or esters of formula (I)): 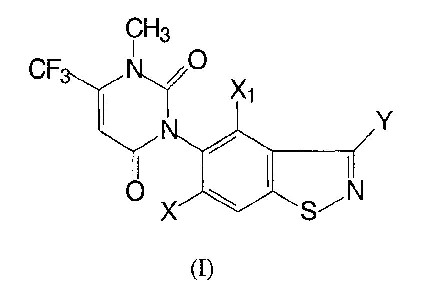 wherein the substituents are described further in the detailed description.

Such compositions are useful in methods of safening a desired plant from injury caused by an herbicidally effective amount of a benzisothiazole herbicide wherein the method includes contacting the desired plant or area intended for crop plants with an antidotally effective amount of a safener.

## Description

### Field of the Invention

The present invention relates to new herbicidal compositions and their methods of use, in particular, the present invention relates to compositions of benzisothiazole herbicides and safeners.

### Background of the Invention

Weeds persist in many crops, thereby lowering crop quantity and quality. Applying herbicides containing active ingredients such as benzisothiazole compounds is effective in the control of weeds. Several references, such as U.S. Patent No. 5,484,763 to Wepplo and U.S. Patent No. 6,156,700 to Wepplo et al., describe benzisothiazole compounds, compositions, and methods of using those compounds.

Although benzisothiazole compounds may be useful to eliminate weeds, cultivated plants may suffer damage due to the concentration of the herbicide, the nature of the soil, and/or the climatic conditions such as the light, rainfall, and temperature. Due to the possibly damaging effect on cultivated crops, some herbicides, such as benzoic acid compositions disclosed in EP 0480902A1 to Miller et al., can be applied with safeners to antagonize the harmful action of the herbicide. Consequently, there is a need for benzisothiazoles-safener compositions and methods of use.

### Summary of the Invention

As embodied and broadly described herein, this invention, in one aspect, relates to an herbicidal composition that includes an herbicidally effective amount of a benzisothiazole herbicide and an antidotally effective amount of a safener. The benzisothiazole herbicide has the formula (I) (including agronomically acceptable salts or esters of formula (I)): 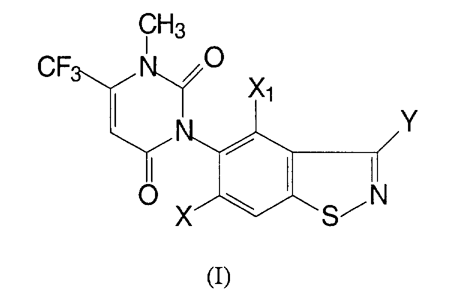 wherein the substituents are described further in the detailed description.

The present invention also relates to a method of safening a desired plant from injury caused by an herbicidally effective amount of a benzisothiazole herbicide wherein the method comprises contacting the desired plant or area intended for crop plants with an antidotally effective amount of a safener.

Advantages of the invention will be set forth in part in the description which follows, and in part will be obvious from the description, or may be learned by practice of the invention. It is to be understood that both the foregoing general description and the following detailed description are exemplary and explanatory only and are not restrictive of the invention, as claimed.

### Detailed Description

The present invention may be understood more readily by reference to the following detailed description of exemplary embodiments of the invention and the examples included therein.

Before the present compounds, compositions, and methods are disclosed and described, it is to be understood that this invention is not limited to specific synthetic methods of making that may of course vary. It is also to be understood that the terminology used herein is for the purpose of describing particular embodiments only and is not intended to be limiting.

In this specification and in the claims that follow, reference will be made to a number of terms that shall be defined to have the following meanings:

The term "alkenyl" as used herein intends a branched or unbranched unsaturated hydrocarbon group containing at least one double bond, such as ethylenyl, propylenyl, 1-butenyl, 2-butenyl, and the like. Geometric structures such as (AB)C=C(CD) are intended to include all isomers. One or more hydrogen atoms of the alkenyl group may be replaced with one or more functional groups.

The term "alkyl" as used herein refers to a branched or unbranched saturated hydrocarbon group, such as methyl, ethyl, *n*-propyl, isopropyl, *n*-butyl, isobutyl, t-butyl, and the like. One or more hydrogen atoms of the alkyl group may be replaced with one or more functional groups.

The term "alkynyl" as used herein refers to a branched or unbranched unsaturated hydrocarbon group containing at least one triple bond, such as acetylenyl, propynyl, 1-butynyl, 2-butynyl, and the like. One or more hydrogen atoms of the alkynyl group may be replaced with one or more functional groups.

"Aryl" includes single benzyl and phenyl rings and two or more aromatic rings in a fused or unfused state. The aromatic rings may be fused at any bond. One or more hydrogen atoms of the aryl group may be replaced with one or more functional groups. Such substituents may be present on any position, i.e. *ortho, meta* or *para* positions or fused to the cyclic structure.

"Cycloalkyl" refers to a cyclic alkyl, alkenyl, or alkynyl group. One or more hydrogen atoms of the cycloalkyl group may be replaced with one or more functional groups. Such substituents may be present on any position, i.e. *ortho, meta* or *para* positions or fused to the cyclic structure.

"Halogen" will be taken to mean fluoro, chloro, bromo and iodo.

"Heteroalkyl" refers to an alkyl group bound through a heteroatom (i.e. oxygen, nitrogen or sulfur) linkage. Typical heteroalkyls include methoxy, ethoxy, propoxy, isopropoxy, methylthio, ethylthio, propylthio, isopropylthio, n-butylthio, dimethylether, ethyl methyl ether, di-n-propyl ether, diisopropyl ether, and 1,2-dimethoxy ethane. One or more hydrogen atoms of the heteroalkyl group may be replaced with one or more functional groups.

"Heterocycle" refers to a cyclic heteroalkyl or heteroalkenyl. One or more hydrogen atoms of the heterocycle group may be replaced with one or more functional groups. Such substituents may be present on any position, i.e. *ortho, meta* or *para* positions.

"Salt" as used herein includes salts that can form with, for example, amines, alkali metal bases and alkaline earth metal bases or quaternary ammonium bases, including zwitterions. Suitable alkali metal and alkaline earth metal hydroxides as salt formers include the hydroxides of lithium, sodium, potassium, magnesium or calcium. Illustrative examples of amines suitable for forming ammonium cations are ammonia as well as primary, secondary and tertiary C₁ -C₁₈ alkylamines, C₁ -C₄ hydroxyalkylamines and C₂ -C₄ alkoxyalkylamines typically methylamine, ethylamine, n-propylamine, isopropylamine, the four isomeric butylamines, n-amylamine, isoamylamine, hexylamine, heptylamine, octylamine, nonylamine, decylamine, pentadecylamine, hexadecylamine, heptadecylamine, octadecylamine, methyl ethylamine, methyl isopropylamine, methyl hexylamine, methyl nonylamine, methyl pentadecylamine, methyl octadecylamine, ethyl butylamine, ethyl heptylamine, ethyl octylamine, hexyl heptylamine, hexyl octylamine, dimethylamine, diethylamine, di-n-propylamine, diisopropylamine, di-n-butylamine, di-n-amylamine, diisoamylamine, dihexylamine, diheptylamine, dioctylamine, ethanolamine, n-propanolamine, isopropanolamine, N,N-diethanolamine, N-ethylpropanolamine, N-butylethanolamine, allylamine, n-but-2-enylamine, n-pent-2-enylamine, 2,3-dimethylbut-2-enylamine, dibut-2-enylamine, n-hex-2-enylamine, propylenediamine, trimethylamine, triethylamine, tri-n-propylamine, triisopropylamine, tri-n-butylamine, triisobutylamine, tri-sec-butylamine, tri-n-amylamine, methoxyethylamine and ethoxyethylamine; heterocyclic amines such as pyridine, quinoline, isoquinoline, morpholine, piperidine, pyrrolidine, indoline, quinuclidine and azepine; primary arylamines such as anilines, methoxyanilines, ethoxyanilines, o-, m- and p-toluidines, phenylenediamines, benzidines, naphthylamines and o-,m- and p-chloroanilines.

In general, "antidotally effective amount" means the amount of safener needed to achieve an observable safened effect on plant growth, including reducing the effects of plant necrosis, plant death, growth inhibition, reproduction inhibition, and inhibition of proliferation. One of ordinary skill in the art will recognize that the potency and, therefore, an "antidotally effective amount," can vary for the various safener compounds/ compositions used in the invention.

"Herbicidally effective amount" means the amount of herbicide needed to achieve an observable herbicidal effect on plant growth, including the effects of plant necrosis, plant death, growth inhibition, reproduction inhibition, inhibition of proliferation, and removal, destruction, or otherwise diminishing the occurrence and activity of a plant. Typically, the herbicide is useful in controlling monocotyledonous and dicotyledonous weeds. One of ordinary skill in the art will recognize that the potency and, therefore, an "herbicidally effective amount," can vary for the various herbicidal compounds/ compositions used in the invention.

"Area intended for crop plants" shall mean the area of soil and/or water in which crop plants are already growing, the area in which the seed of those crop plants has already been sown, and the area intended for growing crop plants before the seed is sown.

As used throughout, the term "contacting" is used to mean that the target plant and/or the area intended for crop plants (i.e. soil, water) has contact with the present compound(s) or composition(s) by application methods known in the art. As such, "contacting" includes both direct contact (applying the compound/composition directly on the plant) and indirect contact (applying the compound/composition to the area intended for crop plants whereupon the plant incorporates the active ingredients). This contact can take place before the desired plant emerges from the soil ("Pre-emergence" or "PRE") or after the desired plant emerges from the soil ("Post-emergence" or "POST"). Additionally, the safeners of the present invention may contact the plant before, after or simultaneously with the benzisothiazole herbicide(s) and any ther composition components or applied chemicals.

The term "desired plant" as used herein means terrestrial plants and aquatic plants. Inclusive of terrestrial plants are dormant seeds, germinating seeds, emerging seedlings and herbaceous vegetation including the roots and above-ground portions, as well as established woody plants. Inclusive of aquatic plants are algae, vegetative organisms free-floating and immersed species that are normally rooted in soil. Exemplary desired plants include cereal crops (wheat, rye, barley, oats), plantation crops, (rubber, pineapple, coffee, bananas, tea), orchard crop plants (citrus fruit trees, apple trees, peach trees, pear trees, nut trees, gum trees, coconut trees, olive trees), and other crop plants including, but not limited to, rice, corn, sorghum, radish, Chinese cabbage, cotton, sugar cane and soybeans.

The benzisothiazole herbicide has the formula (I) (including agronomically acceptable salts or esters of formula (I)): 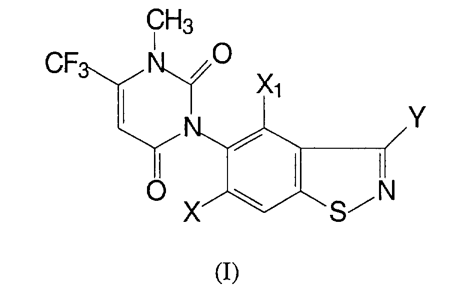 wherein
- X and X₁: are each independently hydrogen or F;
- X₂: is O or NR₂;
- X₃: is O or S;
- Y: is R₁, COR₁, or COX₂R₁;
R₁ is hydrogen,
C₁-C₄ alkyl, C₂-C₄ alkenyl, C₂-C₄ alkynyl, or C₁-C₄ heteroalkyl optionally substituted with SO₂R₃, cyano, nitro, halogen, aryl, X₃R₆, or C₃-C₇ cycloalkyl,
C₃ -C₇ cycloalkyl or C₃-C₇ heterocycle optionally substituted with cyano, nitro, halogen, aryl, X₃R₆, C₁ -C₄ alkyl, C₂-C₄ alkenyl, C₂ -C₄ alkynyl, or C₁-C₄ heteroalkyl, or
aryl optionally substituted with cyano, nitro, halogen, C₃ -C₇ cycloalkyl, C₃-C₇ heterocycle, hydroxyl, C₁ -C₄ alkyl, C₂ -C₄ alkenyl, C₂ -C₄ alkynyl, C₁₋C₄ heteroalkyl, or X₃R₆;
R₂ is hydrogen, SO₂R₃,
C₁ -C₄ alkyl, C₂ -C₄ alkenyl, C₂ -C₄ alkynyl, or C₁ -C₄ heteroalkyl optionally substituted with cyano, nitro, halogen, aryl, hydroxyl, or C₃ -C₇ cycloalkyl,
C₃ -C₇ cycloalkyl or C₃ -C₇ heterocycle optionally substituted with cyano, nitro, halogen, aryl, hydroxyl, C₁ -C₄ alkyl, C₂-C₄ alkenyl, C₂ -C₄ alkynyl, or C₁-C₄ heteroalkyl, or
aryl optionally substituted with cyano, nitro, halogen, C₃ -C₇ cycloalkyl, C₃ -C₇ heterocycle, hydroxyl, C₁ -C₄ alkyl, C₂ -C₄ alkenyl, C₂ -C₄ alkynyl or C₁-C₄ heteroalkyl;
R₃ is hydrogen, NR₄R_{5,}
C₁ -C₁₂ alkyl, C₂ -C₈ alkenyl, C₂ -C₈ alkynyl, or C₁ -C₁₂ heteroalkyl optionally substituted with cyano, nitro, halogen, aryl, hydroxyl, or C₃ -C₇ cycloalkyl,
C₃ -C₇ cycloalkyl or C₃ -C₇ heterocycle optionally substituted with cyano, nitro, halogen, aryl, hydroxyl, C₁ -C₆ alkyl, C₂-C₆ alkenyl, C₂ -C₆ alkynyl, or C₁-C₆ heteroalkyl, or
aryl optionally substituted with cyano, nitro, halogen, C₃ -C₇ cycloalkyl, C₃-C₇ heterocycle, hydroxyl, C₁ -C₆ alkyl, C₂ -C₆ alkenyl, C₂ -C₆ alkynyl or C₁-C₆ heteroalkyl;
R₄ and R₅ are each independently hydrogen, pyrimidine,
C₁-C₈ alkyl, C₂ -C₈ alkenyl, C₂ -C₈ alkynyl, or C₁ -C₈ heteroalkyl optionally substituted with cyano, nitro, halogen, aryl, hydroxyl, or C₃ -C₇ cycloalkyl,
C₃ -C₇ cycloalkyl or C₃ -C₇ heterocycle optionally substituted with cyano, nitro, halogen, aryl, hydroxyl, C₁-C₄ alkyl, C₂-C₄ alkenyl, C₂-C₄ alkynyl, or C₁₋C₄ heteroalkyl; aryl optionally substituted with cyano, nitro, halogen, C₃ -C₇ cycloalkyl, C₃-C₇ heterocycle, hydroxyl, C₁ -C₄ alkyl, C₂ -C₄ alkenyl, C₂ -C₄ alkynyl or C₁-C₄ heteroalkyl; or
when R₄ and R₅ are taken together with the nitrogen to which they are attached they form a C₂-C₁₂ membered monocyclic or fused bicyclic heterocycle;
R₆ is hydrogen,
C₁-C₂₀ alkyl or C₂-C₂₀ alkenyl optionally substituted with one C₁-C₆ alkoxy, CO₂R₇, (CO)R₈, C(O)NR₉R₁₀ or C(O)NHOR₁₁;
R₇ is hydrogen,
C₁-C₂₀ alkyl, C₁-C₁₅ haloalkyl, C₃-C₈ cycloalkyl, C₃-C₈ halocycloalkyl, C₂-C₂₀ alkenyl, C₃-C₁₅ haloalkenyl, C₅-C₈ cycloalkenyl, C₃-C₂₀ alkynyl, or C₃-C₂₀ haloalkynyl optionally substituted aryl, pyridyl, furyl, thienyl, an alkali metal, alkaline earth metal, manganese, copper, zinc, cobalt, silver, nickel, ammonium, or organic ammonium cation;
R₈ is hydrogen, C₁-C₈ alkyl, C₁-C₈ haloalkyl, C₃-C₈ cycloalkyl, C₂-C₆ alkenyl, or
optionally substituted aryl, pyridyl, thienyl, furnyl, or pyrimidyl;
R₉ and R₁₁ are each independently hydrogen, C₁-C₈ alkyl, C₃-C₈ cycloalkyl, C₂-C₆ alkenyl, C₁-C₈ haloalkyl, C₃-C₈ alkynyl, or optionally substituted aryl; and
R₁₀ is hydrogen, SO₂R₃, C₁-C₈ alkyl, C₃-C₈ cycloalkyl, C₂-C₆ alkenyl, C₁-C₈ haloalkyl, C₃-C₈ alkynyl, or optionally substituted aryl.

Benzisothiazole compounds and their methods of making are disclosed in U.S. Patent No. 5,484,763 to Wepplo, U.S. Patent No. 5,523,278 to Wepplo, and U.S. Patent No. 6,156,700 to Wepplo et al., all of which are incorporated by reference in their entireties for all purposes. Exemplary benzisothiazole compounds of formula (I) include, but are not limited to, those compounds wherein
- X₂: is NR₂;
- Y: is COX₂R₁;
- R₂: is SO₂R₃;
- R₁: is hydrogen or C₁-C₄ alkyl unsubstituted or substituted with cyano, nitro, halogen, aryl, hydroxyl, or C₃ -C₇ cycloalkyl;
- R₃: is NR₄R₅, C₁ -C₁₂ alkyl , or C₁ -C₁₂ heteroalkyl, wherein the alkyl, or heteroalkyl is unsubstituted or substituted with cyano, nitro, halogen, aryl, hydroxyl, or C₃ -C₇ cycloalkyl; and
- R₄ and R₅: are each independently hydrogen or C₁-C₈ alkyl unsubstituted or substituted with cyano, nitro, halogen, aryl, hydroxyl, or C₃ -C₇ cycloalkyl.
- R₁: may also be phenyl optionally substituted with C₁-C₄ alkyl or X₃R₆, such as those compounds including compound I-1 detailed in Example 1.

Benzisothiazole compounds of formula (I) include those compounds wherein Y is COX₂R₁, X₂ is NR₂, and R₂ is SO₂R₃ such as: 1,2-benzisothiazole-3-carboxamide, 5-[3,6-dihydro-3-methyl-2,6-dioxo-4-(trifluoromethyl)-1(2H)-pyrimidinyl]-N-(isopropylsulfonyl); 1,2-benzisothiazole-3-carboxamide, 5-[3,6-dihydro-3-methyl-2,6-dioxo-4-(trifluoromethyl)-1(2H)-pyrimidinyl]-N-(methylsulfonyl); 1,2-benzisothiazole-3-carboxamide, 5-[3,6-dihydro-3-methyl-2,6-dioxo-4-(trifluoromethyl)-1(2H)-pyrimidinyl]-N-(choromethyllsulfonyl); 1,2-benzisothiazole-3-carboxamide, 5-[3,6-dihydro-3-methyl-2,6-dioxo-4-(trifluoromethyl)-1(2H)-pyrimidinyl]-N-(benzylsulfonyl); 1,2-benzisothiazole-3-carboxamide, 5-[3,6-dihydro-3-methyl-2,6-dioxo-4-(trifluoromethyl]-1(2H)-pyrimidinyl]-N-(phenylsulfonyl); 1,2-benzisothiazole-3-carboxamide, 5-[3,6-dihydro-3-methyl-2,6-dioxo-4-(trifluoromethyl)-1(2H)-pyrimidinyl]-N-(p-tolylsulfonyl); 1,2-benzisothiazole-3-carboxamide, 5-[3,6-dihydro-3-methyl-2,6-dioxo-4-(trifluoromethyl)-1(2H)-pyrimidinyl]-N-(p-chorophenylsulfonyl); 1,2-benzisothiazole-3-carboxamide, 5-[3,6-dihydro-3-methyl-2,6-dioxo-4-(trifluoromethyl)-1(2H)-pyrimidinyl]-N-(2-naphthylsulfonyl); 1,2-benzisothiazole-3-carboxamide, 5-[3,6-dihydro-3-methyl-2,6-dioxo-4-(trifluoromethyl)-1(2H)-pyrimidinyl]-N-(dodecylsulfonyl); 1,2-benzisothiazole-3-carboxamide, 5-[3,6-dihydro-3-methyl-2,6-dioxo-4-(trifluoromethyl)-1(2H)-pyrimidinyl]-N-(methylsulfonyl); 1,2-benzisothiazole-3-carboxamide, 5-[3,6-dihydro-3-methyl-2,6-dioxo-4-(trifluoromethyl)-1(2H)-pyrimidinyl]-N-(ethoxymethyl)-N-(methylsulfonyl); 1,2-benzisothiazole-3-carboxamide, 5-[3,6-dihydro-3-methyl-2,6-dioxo-4-(trifluoromethyl)-1(2H)-pyrimidinyl]-N-(ethylsulfonyl); 1,2-benzisothiazole-3-carboxamide, 5-[3,6-dihydro-3-methyl-2,6-dioxo-4-(trifluoromethyl)-1(2H)-pyrimidinyl]-N-(2-thienylsulfonyl); 1,2-benzisothiazole-3-carboxamide, 5-[3,6-dihydro-3-methyl-2,6-dioxo-4-(trifluoromethyl)-1(2H)-pyrimidinyl]-N-(benzyllsulfonyl)-N-(ethoxymethyl); glycine, N-(benzylsulfonyl)-N-{{5-[3,6-dihydro-3-methyl-2,6-dioxo-4-(trifluoromethyl)- 1(2H)-pyrimidinyl]-1,2-benzisothiazol-3-yl}carbonyl}-, methyl ester; 1,2-benzisothiazole-3-carboxamide, 5-[3,6-dihydro-3-methyl-2,6-dioxo-4-(trifluoromethyl)-1(2H)-pyrimidinyl]-N-[(p-methylbenzyl)sulfonyl]; 1,2-benzisothiazole-3-carboxamide, 5-[3,6-dihydro-3-methyl-2,6-dioxo-4-(trifluoromethyl)-1(2H)-pyrimidinyl]-N-[(o-methylbenzyl)sulfonyl]; 1,2-benzisothiazole-3-carboxamide, 5-[3,6-dihydro-3-methyl-2,6-dioxo-4-(trifluoromethyl)-1(2H)-pyrimidinyl]-N-[(p-chlorobenzyl)sulfonyl]; 1,2-benzisothiazole-3-carboxamide, 5-[3,6-dihydro-3-methyl-2,6-dioxo-4-(trifluoromethyl)-1(2H)-pyrimidinyl]-N-(benzylsulfonyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(m-methylbenzyl)sulfonyl]; 1,2-benzisothiazole-3-carboxamide, 5-[3,6-dihydro-3-methyl-2,6-dioxo-4-(trifluoromethyl)-1(2H)-pyrimidinyl]-N-(phenethylsulfonyl); 1,2-benzisothiazole-3-carboxamide, 5-[3,6-dihydro-3-methyl-2,6-dioxo-4-(trifluoromethyl)-1(2H)-pyrimidinyl]-N-[(m-chlorobenzyl)sulfonyl]; 1,2-benzisothiazole-3-carboxamide, 5-[3,6-dihydro-3-methyl-2,6-dioxo-4-(trifluoromethyl)-1(2H)-pyrimidinyl]-N-(benzylsulfonyl)-N-methyl; 1,2-benzisothiazole-3-carboxamide, 5-[3,6-dihydro-3-methyl-2,6-dioxo-4-(trifluoromethyl)-1(2H)-pyrimidinyl]-N-(styrylsulfonyl)-, (E); 1,2-benzisothiazole-3-carboxamide, 5-[3,6-dihydro-3-methyl-2,6-dioxo-4-(trifluoromethyl)-1(2H)-pyrimidinyl]-N-[(1-methylpropyl)sulfonyl]; 1,2-benzisothiazole-3-carboxamide, 5-[3,6-dihydro-3-methyl-2,6-dioxo-4-(trifluoromethyl)-1(2H)-pyrimidinyl]- N-[(o-nitrobenzyl}sulfonyl]; 1,2-benzisothiazole-3-carboxamide, 5-[3,6-dihydro-3-methyl-2,6-dioxo-4-(trifluoromethyl)- 1(2H)-pyrimidinyl]-N-[(p-tert-butylbenzyl)sulfonyl]; 1,2-benzisothiazole-3-carboxamide, 5-[3,6-dihydro-3-methyl-2,6-dioxo-4-(trifluoromethyl)-1(2H)-pyrimidinyl]-N-{[p-(trifluoromethoxy) benzyl]sulfonyl); 1,2-benzisothiazole-3-carboxamide, 5-[3,6-dihydro-3-methyl-2,6-dioxo-4-(trifluoromethyl)-1(2H)-pyrimidinyl]-N-[(alpha-methylbenzyl)sulfonyl]; 1,2-benzisothiazole-3-carboxamide, 5-[3,6-dihydro-3-methyl-2,6-dioxo-4-(trifluoromethyl)-1(2H)-pyrimidinyl]-N-(isopropylsulfonyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-(propylsulfonyl); 1,2-benzisothiazole-3-carboxamide, 5-[3,6-dihydro-3-methyl-2,6-dioxo-4-(trifluoromethyl)-1(2H)-pyrimidinyl]-N-(propylsulfonyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-(phenylsulfonyl) -6-fluoro; 1,2-benzisothiazole-3-carboxamide, 5-[3,6-dihydro-3-methyl-2,6-dioxo-4-(trifluoromethyl)-1(2H)-pyrimidinyl]-N-[(p-methoxyphenyl)sulfonyl]; 1,2-benzisothiazole-3-carboxamide, 5-[3,6-dihydro-3-methyl-2,6-dioxo-4-(trifluoromethyl)-1(2H)-pyrimidinyl]-N-[(p-methoxyphenyl)sulfonyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-{o-[(m-methyl)methoxyphenyl]sulfonyl}; 1,2-benzisothiazole-3-carboxamide, 5-[3,6-dihydro-3-methyl-2,6-dioxo-4-(trifluoromethyl)-1(2H)-pyrimidinyl]-N-{o-[(m-methyl)methoxyphenyl]sulfonyl}-6-fluoro; 1,2-benzisothiazole-3-carboxamide, 5-[3,6-dihydro-3-methyl-2,6-dioxo-4-(trifluoromethyl)-1(2H)-pyrimidinyl]-N-(o-[(m-methoxy) methoxyphenyl] sulfonyl}; 1,2-benzisothiazole-3-carboxamide, 5-[3,6-dihydro-3-methyl-2,6-dioxo-4-(trifluoromethyl)-1(2H)-pyrimidinyl]-N-{o-[(m-methoxy)methoxyphenyl] sulfonyl}-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(p-nitrophenyl)sulfonyl]; 1,2-benzisothiazole-3-carboxamide, 5-[3,6-dihydro-3-methyl-2,6-dioxo-4-(trifluoromethyl)-1(2H)-pyrimidinyl]-N -[(p-nitrophenyl)sulfonyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-thienyl-3-chloro)sulfonyl]; 1,2-benzisothiazole-3-carboxamide, 5-[3,6-dihydro-3-methyl-2,6-dioxo-4-(trifluoromethyl)-1(2H)-pyrimidinyl]-N-[(2-thienyl-3-chloro) sulfonyl]; 1,2-benzisothiazole-3-carboxamide, 5-[3,6-dihydro-3-methyl-2,6-dioxo-4-(trifluoromethyl)-1(2H)-pyrimidinyl]-N-(methylsulfonyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(dichloromethyl)sulfonyl]; 1,2-benzisothiazole-3-carboxamide, 5-[3,6-dihydro-3-methyl-2,6-dioxo-4-(trifluoromethyl)-1(2H)-pyrimidinyl]-N-[(dichloromethyl)sulfonyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(trifluoromethyl)sulfonyl]; 1,2-benzisothiazole-3-carboxamide, 5-[3,6-dihydro-3-methyl-2,6-dioxo-4-(trifluoromethyl)-1(2H)-pyrimidinyl]-N-[(trifluoromethyl)sulfonyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(1-methylpropyl)sulfonyl] -6-fluoro; 1,2-benzisothiazole-3-carboxamide, 5-[3,6-dihydro-3-methyl-2,6-dioxo-4-(trifluoromethyl)-1(2H)-pyrimidinyl]-N-(ethylsulfony 10-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(m-methylbenzyl)sulfonyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(o-methylbenzyl)sulfonyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(p-methylbenzyl)sulfonyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(p-chlorobenzyl)sulfonyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-methylpropyl)sulfonyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-propenyl)sulfonyl]; 1,2-benzisothiazole-3-carboxamide, 5-[3,6-dihydro-3-methyl-2,6-dioxo-4-(trifluoromethyl)-1(2H)-pyrimidinyl]-N-[(m-methoxybenzyl)sulfonyl]; and 1,2-benzisothiazole-3-carboxamide, 5-[3,6-dihydro-3-methyl-2,6-dioxo-4-(trifluoromethyl)-1(2H)-pyrimidinyl]-N-[(m-ethylbenzyl)sulfonyl]-6-fluoro.

Further example benzisothiazole compounds wherein Y is COX₂R₁, X₂ is NR₂, R₂ is SO₂R₃, and R₃ is NR₄R₅ include compounds such as: 1,2-benzisothiazole-3-carboxamide, 5-[3,6-dihydro-3-methyl-2,6-dioxo-4-(trifluoromethyl)-1(2H)-pyrimidinyl]-N-(dimethylsulfamoyl)-6 fluoro; 1,2-benzisothiazole-3-carboxamide, 5-[3,6-dihydro-3-methyl-2,6-dioxo-4-(trifluoromethyl)-1(2H)-pyrimidinyl]-N-sulfamoyl; 1,2-benzisothiazole-3-carboxamide, 5-[3,6-dihydro-3-methyl-2,6-dioxo-4-(trifluoromethyl)-1(2H)-pyrimidinyl]-N-(diisopropylsulfamoyl); 1,2-benzisothiazole-3-carboxamide, 5-[3,6-dihydro-3-methyl-2,6-dioxo-4-(trifluoromethyl)-1(2H)-pyrimidinyl]-N-(dimethylsulfamoyl); 1,2-benzisothiazole-3-carboxamide, 5-[3,6-dihydro-3-methyl-2,6-dioxo-4-(trifluoromethyl)-1(2H)-pyrimidinyl]-N-(isopropylsulfamoyl); 1,2-benzisothiazole-3-carboxamide, 5-[3,6-dihydro-3-methyl-2,6-dioxo-4-(trifluoromethyl)-1(2H)-pyrimidinyl]-N-[(p-chlorobenzyl)methylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-(diisopropylsulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-(cyclopentylsulfamoyl); 1,2-benzisothiazole-3-carboxamide, 5-[3,6-dihydro-3-methyl-2,6-dioxo-4-(trifluoromethyl)-1(2H)-pyrimidinyl]-N-{[di-(1-methylisopropyl)]sulfamoyl}; 1,2-benzisothiazole-3-carboxamide, 5-[3,6-dihydro-3-methyl-2,6-dioxo-4-(trifluoromethyl)-1(2H)-pyrimidinyl]-N-{[1-(dimethylamide)ethylimine]sulfamoyl}; 1,2-benzisothiazole-3-carboxamide, 5-[3,6-dihydro-3-methyl-2,6-dioxo-4-(trifluoromethyl)-1(2H)-pyrimidinyl]-N-(piperidinylsulfamoyl); 1,2-benzisothiazole-3-carboxamide, 5-[3,6-dihydro-3-methyl-2,6-dioxo-4-(trifluoromethyl)-1(2H)-pyrimidinyl]-N-{[(dimethylamide)methylamine]sulfamoyl}; 1,2-benzisothiazole-3-carboxamide, 5-[3,6-dihydro-3-methyl-2,6-dioxo-4-(trifluoromethyl)-1(2H)-pyrimidinyl]-N-(diiethylsulfamoyl); 1,2-benzisothiazole-3-carboxamide, 5-[3,6-dihydro-3-methyl-2,6-dioxo-4-(trifluoromethyl)-1(2H)-pyrimidinyl]-N-(cyclopropylsulfamoyl); 1,2-benzisothiazole-3-carboxamide, 5-[3,6-dihydro-3-methyl-2,6-dioxo-4-(trifluoromethyl)-1(2H)-pyrimidinyl]-N-{[di-(m-methyl)]morpholinylsulfamoyl}; 1,2-benzisothiazole-3-carboxamide, 5-[3,6-dihydro-3-methyl-2,6-dioxo-4-(trifluoromethyl)-1(2H)-pyrimidinyl]-N-{2-[di-(methoxy)]ethylsulfamoyl}; 1,2-benzisothiazole-3-carboxamide, 5-[3,6-dihydro-3-methyl-2,6-dioxo-4-(trifluoromethyl)-1(2H)-pyrimidinyl]-N-(benzylsulfamoyl); 1,2-benzisothiazole-3-carboxamide, 5-[3,6-dihydro-3-methyl-2,6-dioxo-4-(trifluoromethyl)-1(2H)-pyrimidinyl]-N-(dimethylsulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-(methyl, 2-propenylsulfamoyl); 1,2-benzisothiazole-3-carboxamide, 5-[3,6-dihydro-3-methyl-2,6-dioxo-4-(trifluoromethyl)-1(2H)-pyrimidinyl]-N-[(p-methoxybenzyl)sulfamoyl]; 1,2-benzisothiazole-3-carboxamide, 5-[3,6-dihydro-3-methyl-2,6-dioxo-4-(trifluoromethyl)-1(2H)-pyrimidinyl]-N-(t-butylsulfamoyl); 1,2-benzisothiazole-3-carboxamide, 5-[3,6-dihydro-3-methyl-2,6-dioxo-4-(trifluoromethyl)-1(2H)-pyrimidinyl]-N-[(t-butyl)methylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-(phenylsulfamoyl); 1,2-benzisothiazole-3-carboxamide, 5-[3,6-dihydro-3-methyl-2,6-dioxo-4-(trifluoromethyl)-1(2H)-pyrimidinyl]-N-[(3-cyanopropyl)methylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-(methylsulfamoyl); 1,2-benzisothiazole-3-carboxamide, 5-[3,6-dihydro-3-methyl-2,6-dioxo-4-(trifluoromethyl)-1(2H)-pyrimidinyl]-N-[(benzyl)methylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-{[di-(m-methoxy)] pyrimidinylsulfamoyl}; 1,2-benzisothiazole-3-carboxamide, 5-[3,6-dihydro-3-methyl-2,6-dioxo-4-(trifluoromethyl)-1(2H)-pyrimidinyl]-N-[(cyano)t-butylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-[(2-tetrahydrofuranyl)methylsulfamoyl]; 1,2-benzisothiazole-3-carboxamide, 5-[3,6-dihydro-3-methyl-2,6-dioxo-4-(trifluoromethyl]-1(2H)-pyrimidinyl]-N-(2-ethenoxysulfamoyl); 1,2-benzisothiazole-3-carboxamide, 5-[3,6-dihydro-3-methyl-2,6-dioxo-4-(trifluoromethyl)-1(2H)-pyrimidinyl]-N-(sulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-propynyl)methylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-(methoxysulfamoyl); 1,2-benzisothiazole-3-carboxamide, 5-[3,6-dihydro-3-methyl-2,6-dioxo-4-(trifluoromethyl)-1(2H)-pyrimidinyl]-N-[(2-pyridinyl)methylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-[di-(2-cyanoethyl)sulfamoyl]; 1,2-benzisothiazole-3-carboxamide, 5-[3,6-dihydro-3-methyl-2,6-dioxo-4-(trifluoromethyl)-1(2H)-pyrimidinyl]-N-[(phenyl)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(t-butyl)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-(phenylsulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(p-methoxy)phenylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-(cyclopentylsulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-thiophenol)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[1-(2-trifluoroethyl)ethylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(isopropyl)methylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-[(isopropyl)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(propyl)methylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-[(2-furanyl)methylsulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-{1-[(p-methoxy)benzyl]ethylsulfamoyl); 1,2-benzisothiazole-3-carboxamide, 5-[3,6-dihydro-3-methyl-2,6-dioxo-4-(trifluoromethyl)-1(2H)-pyrimidinyl]-N-[3-(pyridinyl)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(cyano)t-butylsulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-[4-(pyridinyl)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(methoxy) methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-{[(o-chloro)benzyl]methylsulfamoyl}-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(phenyl)isopropylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(1-cyanomethyl)cyclohexylsulfamoyl; 1,2-benzisothiazole-3-carboxamide, 5-[3,6-dihydro-3-methyl-2,6-dioxo-4-(trifluoromethyl)-1(2H)-pyrimidinyl]-N-[(1-cyanomethyl)cyclohexylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl] -N-[(2-propynyl)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(ethyl)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-{[(2-methyl)propyl]methylsulfamoyl}; 1,2-benzisothiazole-3-carboxamide, 5-[3,6-dihydro-3-methyl-2,6-dioxo-4-(trifluoromethyl)-1 (2H)-pyrimidinyl]-N-[(2-tetrahydrofuranyl)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-(t-butylsulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-propynyl)cyclopentylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-propenyl)methylsulfamoyl]-6-fluoro; Glycine, N-(methylsulfamoyl)-{{5-[3,6-dihydro-3-methyl-2,6-dioxo-4-(trifluoromethyl)-1(2H)-pyrimidinyl]-1,2-benzisothiazol-3-yl}carbonyl}-, methyl ester; 1,2-benzisothiazole-3-carboxamide, 5-[3,6-dihydro-3-methyl-2,6-dioxo-4-(trifluoromethyl)-1(2H)-pyrimidinyl]-N-[(2-propynyl)t-butylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-{[(1-methyl)propyl]2-propynylsulfamoyl; 1,2-benzisothiazole-3-carboxamide, 5-[3,6-dihydro-3-methyl-2,6-dioxo-4-(trifluoromethyl)-1(2H)-pyrimidinyl]-N-[(2-propynyl)phenylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(p-methoxy)benzylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(3-cyanopropyl)2-propynylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[{(2-methyl)propyl]methylsulfamoyl}-6-fluoro; 1,2-benzisothiazole-3-carboxamide, 5-[3,6-dihydro-3-methyl-2,6-dioxo-4-(trifluoromethyl)-1(2H)-pyrimidinyl]-N-(2-propynylsulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-(ethylsulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-(ethylsulfamoyl); 1,2-benzisothiazole-3-carboxamide, 5-[3,6-dihydro-3-methyl-2,6-dioxo-4-(trifluoromethyl)-1(2H)-pyrimidinyl]-N-(di-2-propenylsulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(p-methoxybenzyl)2-propynylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-propynyl)phenylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-[(2-propynyl)cylcopentylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-(pyrrolidinylsulfamoyl); 1,2-benzisothiazole-3-carboxamide, 5-[3,6-dihydro-3-methyl-2,6-dioxo-4-(trifluoromethyl)-1(2H)-pyrimidinyl]-N-[(p-methoxybenzyl)2-propynylsulfamoyl]; Glycine, N-(sulfamoyl)-{{5-[3,6-dihydro-3-methyl-2,6-dioxo-4-(trifluoromethyl)-1(2H)-pyrimidinyl]-1,2-benzisothiazol-3-yl}carbonyl}-6-fluoro, methyl ester; 1,2-benzisothiazole-3-carboxamide, 5-[3,6-dihydro-3-methyl-2,6-dioxo-4-(trifluoromethyl)-1(2H)-pyrimidinyl]-N-(diethylsulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-propynyl)2-propenylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-propynyl)isopropylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-methoxyethyl)2-propynylsulfamoyl]-6-fluoro; Glycine, N-(methylsulfamoyl)-{{5-[3,6-dihydro-3-methyl-2,6-dioxo-4-(trifluoromethyl)-1(2H)-pyrimidinyl]-1,2-benzisothiazol-3-yl}carbonyl}-6-fluoro, methyl ester; 1,2-benzisothiazole-3-carboxamide, 5-[3,6-dihydro-3-methyl-2,6-dioxo-4-(trifluoromethyl)-1(2H)-pyrimidinyl]-N-[(t-butyl)2-propynylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(1-methylpropyl)2-propynylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-(pyrrolidinylsulfamoyl)-6-fluoro; Glycine, N-(sulfamoyl)-{{5-[3,6-dihydro-3-methyl-2,6-dioxo-4-(trifluoromethyl)-1(2H)-pyrimidinyl]-1,2-benzisothiazol-3-yl}carbonyl}-6-fluoro, methyl ester; 1,2-benzisothiazole-3-carboxamide, 5-[3,6-dihydro-3-methyl-2,6-dioxo-4-(trifluoromethyl)-1(2H)-pyrimidinyl]-N-[(p-chlorobenzyl)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-cyanoethyl)2-propynylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-(cyclohexylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-cyanoethyl)2-propynylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-propynyl)ethylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]--N-(piperidinylsulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-(o-chlorobenzylsulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-trifluoroethyl)2-propynylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-[(2-trifluoroethyl)2-propynylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-propynyl)cyclopropylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-propynyl)cylcopropylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-[(1,1-dimethyl-2-propynyl)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-(p-chlorobenzylsulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(p-dimethylaminobenzyl)sulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(methylbenzyl)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(1,1-dimethyl-2 propynyl)methylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-[(p-methoxybenzyl)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(o-methoxybenzyl)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(p-methylthiobenzyl)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-(o-methoxybenzyl)sulfamoyl)-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(p-dimethylaminobenzyl)methylsulfamoyl]-6-fluoro; 1,2-benzisothiazole-3-carboxamide, 5-[3,6-dihydro-3-methyl-2,6-dioxo-4-(trifluoromethyl)-1(2H)-pyrimidinyl]-N-[(2-propynyl)benzylsulfamoyl]; 1,2-benzisothiazole-3-carboxamide, 5-[3,6-dihydro-3-methyl-2,6-dioxo-4-(trifluoromethyl)-1(2H)-pyrimidinyl]-N-[(2-propynyl)benzylsulfamoyl]-6-fluoro; and 1,2-benzisothiazole-3-carboxamide, 5-[3,6-dihydro-3-methyl-2,6-dioxo-4-(trifluoromethyl)-1(2H)-pyrimidinyl]-N-(methylbenzylsulfamoyl)-6-fluoro.

Example compounds of formula (I) wherein Y is R₁ include acetic acid{{2-{5-[3,6-dihydro-3-methyl-2,6-dioxo-4-(trifluoromethyl)-1(2H)-pyrimidinyl]-1,2-benzisothiazol-3-yl}-p-tol}oxy-, methyl ester (compound I-1 of Example 1), 6-fluoro-3-(methoxymethyl)-5-(3,6-dihydro-2,6-dioxo-3-methyl-4-trifluoromethyl-2H-pyrimidin-1-yl)benzo[d]isothiazole, or 3-(1,3-dioxolan-2-yl)-6-fluoro-5-(3,6-dihydro-2,6-dioxo-3-methyl-4-trifluoromethyl-2H-pyrimidin-1-yl)benzo[d]isothiazole.

The compositions of the present invention include one or more safeners. Several safeners are disclosed in EP480902A1 to Bosch et al. and WO96/29870 to Glock et al., both of which are incorporated by reference in their entireties for all purposes. Exemplary safeners include: M-12874 ([3-(2,2-Dichloro-acetyl)-2-methylthiazolidin-2-yl]-acetic acid methyl ester); R-29148 (2,2-Dichloro-1-(2,2,5-trimethyl-oxazolidin-3-yl)-ethanone); furilazole ((RS)-3-dichloroacetyl-5-(2-furyl)-2,2-dimethyloxazolidine); flurazole (benzyl 2-chloro-4-trifluoromethyl-1,3-thiazole-5-carboxylate); benoxacor ((±)-4-dichloroacetyl-3,4-dihydro-3-methyl-2*H*-1,4-benzoxazine); acetochlor (2-chloro-N-ethoxymethyl-6'-ethylaceto-o-toluidide); fluxofenim (4'-chloro-2,2,2-trifluoroacetophenone *O*-1,3-dioxolan-2-ylmethyloxamine); dichlormid (*N*,*N*-diallyl-2,2-dichloroacetamide); oxabetrinil ((*Z*)-1,3-dioxolan-2-ylmethoxyimino(phenyl) acetonitrile); cyometrinil ((*Z*)-cyanomethoxyimino(phenyl) acetonitrile); fenclorim (4,6-dichloro-2-phenylpyrimidine); MG 191 (2-dichloromethyl-2-methyl-1,3-dioxolane); fenchlorazole-ethyl (ethyl 1-(2,4-dichlorophenyl)-5-(trichloromethyl)-1*H*-1,2,4-triazole-3-carboxylate); cloquintocet-mexyl (1-methylhexyl (5-chloroquinolin-8-yloxy)acetate); TI-35 (1-(dichloroacetyl)hexahydro-1*H*-azepine); AD 67 (4-(dichloroacetyl)-1-oxa-4-azaspiro[4,5]decane); mefenpyr-diethyl (diethyl (*RS*)-1-(2,4-dichlorophenyl)-5-methyl2-pyrazoline-3,5-dicarboxylate); dicyclonon ((*RS*)-1-dichloroacetyl-3,3,8a-trimethylperhydropyrrolo[1,2-*a*]pyrimidin-6-one); dietholate (*O,O*-diethyl *O*-phenyl phosphorothioate); isoxadifen (4.5-dihydro-5,5-diphenyl-1,2-oxazole-3-carboxylic acid); mephenate (4-chlorophenyl methylcarbamate); DKA-24 (N¹N²-diallyl=N²-dichlorocetylglycinamide); NAK (dipotassium naphthalene-1,8-dicarboxylate monohydrate); phenoxathiine-4-carboxylic acid; 4H-1-Benzopyran-4-acetic acid, 4-carboxy-2,3-dihydro-; methyl 5-[2-chloro-4-(trifluoromethyl)phenoxy]-2-(2-methoxy-2-oxoethoxy)benzoate; benzoic acid, 2-(carboxymethoxy)-5-[2-chloro-4-(trifluoromethyl)phenoxy]-, diammonium salt; methanone, (2-butoxy-3,4-dimethoxy-6-methylphenyl)(2,6-dichlorophenyl)-; methyl 1-benzothiophene-5-carboxylate 1,1-dioxide and dimethenamid-P.

Herbicidal compositions of the present invention may also contain a carrier. The carrier is a natural or synthetic organic or inorganic ingredient with which one or more of the compounds and/or safeners may be combined to facilitate dispersion of the compound/composition and contact with the plant. The carrier may be solid (e.g. clays, synthetic silicates, silica, resins, waxes, and combinations thereof); liquid (e.g. water, aqueous solutions, N-methylpyrrolidone, methanol, ethanol, isopropyl alcohol, acetone, butyl cellosolved, 2-ethyl-1 hexanol, cyclohexanone, methyl cellulose, polyvinyl alcohol, sodium lignin sulfonates, polymeric alkyl naphthalene sulfonates, sodium naphthalene sulfonate, polymethylene bisnaphthalenesulfonate, sodium N-methyl-N-(long chain acid) laureates, hydrocarbons and other water-immiscible ethers, esters and ketones, and combinations thereof); or a combination of solid and liquid carriers.

In general, conventional herbicidal compositions contain one or more surfactants to increase the biological effectiveness of the active ingredient. As such, one or more surface active ingredients may be added to the composition, if desired. Suitable surface active ingredients include surfactants, emulsifying agents, and wetting agents. A wide range of surfactants is available and can be selected readily by those skilled in the art from "The Handbook of Industrial Surfactants," 2nd Edition, Gower (1997), which is incorporated herein by reference in its entirety for all purposes. There is no restriction on the type or chemical class of surfactant that can be used. Nonionic, anionic, cationic and amphoteric types, or combinations of more than one of these types, are all useful in particular situations.

Among nonionic surfactants, exemplary classes include polyoxyethylene alkyl, alkyne, alkynyl or alkylaryl ethers, such as polyoxyethylene primary or secondary alcohols, alkylphenols or acetylenic diols; polyoxyethylene alkyl or alkyne esters, such as ethoxylated fatty acids; sorbitan alkylesters, whether ethoxylated or not; glyceryl alkylesters; sucrose esters; and alkyl polyglycosides. Exemplary anionic surfactant classes include fatty acids, sulfates, sulfonates, and phosphate mono- and diesters of alcohols, alkylphenols, polyoxyethylene alcohols and polyoxyethylene alkylphenols, and carboxylates of polyoxyethylene alcohols and polyoxyethylene alkylphenols. These can be used in their acid form but are more typically used as salts, for example sodium, potassium or ammonium salts.

Cationic surfactants classes include polyoxyethylene tertiary alkylamines or alkenylamines, such as ethoxylated fatty amines, quaternary ammonium surfactants and polyoxyethylene alkyletheramines. Representative specific examples of such cationic surfactants include polyoxyethylene (5) cocoamine, polyoxyethylene (15) tallowamine, distearyldimethylammonium chloride, N-dodecylpyridine chloride and polyoxypropylene (8) ethoxytrimethylammonium chloride. Many cationic quaternary ammonium surfactants of diverse structures are known in the art to be useful in combination with herbicides and can be used in compositions contemplated herein.

Suitable emulsifying agents and wetting agents include, but are not limited to, ionic and nonionic types such as polyacrylic acid salts, lignosulphonic acid salts, phenolsulphonic or naphthalenesulphonic acids, products of polycondensation of ethylene oxide with fatty alcohols, fatty acids or fatty amines, substituted phenols (especially alkylphenols or arylphenols), sulphonosuccinic acid ester salts, taurine derivatives (especially alkyl taurates), phosphoric esters of alcohols or products of polycondensation of ethylene oxide with phenols, esters of fatty acids with polyhydric alcohols, and derivatives having sulphate, sulphonate and phosphate groups, of the compounds above.

Compositions of this invention may also contain other active ingredients, for example fertilizers such as ammonium nitrate, urea, potash, and superphosphate; phytotoxicants and plant growth regulators; and pesticides. These additional ingredients may be used sequentially or in combination with the above-described compositions. For example, the plant(s) may be sprayed with a composition of this invention either before or after being treated with other active ingredients. The compositions of this invention can also be admixed with the other active ingredients and applied in a single application. Exemplary additional ingredients include: metolachor (2-chloro-6'-ethyl-N-(2-methoxy-1-methylethyl)aceto-o-toluidide); piperonyl butoxide (5-[2-(2-butoxyethoxy)ethoxymethyl]-6-propyl-1,3-benzodioxole); terbufos (S-*tert*-butylthiomethyl -diethyl phosphorodithioate); thiobencarb (S-4-chlorobenzyl diethylthiocarbamate); daimuron (1-(1-methyl-1-phenylethyl)-3-p-tolylurea) and acibenzolar-S-methyl (S-methyl benzo[1,2,3]thiadiazole-7-carbothioate).

Other optional components may be admixed with the present compositions to facilitate the application and/or effectiveness of the active ingredient. To this end, optional components that may be added include antifoaming agents including silicone based antifoaming agents; thickening agents such as fumed silica; antimicrobial agents; antioxidants; buffers; dyes; perfumes; stabilizing agents; and antifreezing agents. Exemplary antifreezing agents include but are not limited to, glycols such as propylene glycol and ethylene glycol, N-methylpyrrolidone, cyclohexanone, and alcohols such as ethanol and methanol.

The compositions of the present invention are suitable for all methods of application used in agriculture, including pre-emergence application, post-emergence application, and seed dressing. As such, the compositions may be present in any effective formulation, including, but not limited to, liquid concentrated and diluted solutions, powders and emulsifications.

Liquid concentrated and diluted solutions can be prepared by mixing together the components of a composition of this invention with a liquid carrier to obtain the desired concentration. In general, concentrated solutions are sold commercially and may be mixed with water by the end user, thereby creating a dilute solution.

The amounts of herbicide and safener that are optimal depend on the application method, the type of the herbicide or safener used, as well as on the nature of the plant stand to be treated, and they can be determined in each individual case by suitable preliminary experiments. Where a treatment is carried out either by using a tank mixture with a composition of herbicide and safener or by separate application of herbicide and safener, the ratio of safener to herbicide may be in the range from about 1:100 to 10:1, in particular from 1:10 to 5:1. The tank mixture is applied before or after sowing.

The application of an antidotally effective amount of the liquid solution compositions of this invention to the target plant is dependent upon the response desired in the plant as well as such other factors as the plant species and stage of development thereof, the amount of rainfall, and the specific herbicide and safener employed. In treatment of terrestrial plants, the safener is desirably applied in amounts from about 1.0 g/ha to about 5000 g/ha (grams per hectare), the herbicide is desirably applied in amounts from about 0.1 g/ha to about 5000 g/ha, and a composition is desirably applied at a rate of about 0.5 g/ha to about 250 g/ha. In applications for aquatic plants, the safener is desirably applied in amounts of from about 0.01 parts per million to about 1000 parts per million, based on the aquatic medium.

Powder compositions containing one or more herbicidal salts of the present invention, a carrier, an inert solid extender and one or more wetting agents are also part of the present invention. The inert solid extenders are usually of mineral origin such as the natural clays, diatomaceous earth and synthetic materials derived from silica and the like. Examples of such extenders include, but are not limited to, kaolinites, attapulgite clay and synthetic magnesium silicate. The powders of this invention usually contain from about 5% to about 95% of herbicide and/or safener, from about 0.25% to about 25% of carrier, from about 0.25% to about 25% of wetting agent and from about 4.5% to about 94.5% of inert solid extender, all percents being by weight of the total compositions.

Such powder compositions are useful for seed dressings. Dressing the seeds with a wettable powder formulation of the active ingredient may be performed by adding the seeds to a vessel with the powder composition and/or safener and shaking the vessel until the powder is uniformly distributed on the surface of the seeds. This method may also be performed with an emulsification by replacing the powder with an emulsification. Seed dressing may also be performed by immersing the seeds in a mixture containing about 10-1000 ppm of active ingredient and, where appropriate, drying the seeds. For seed dressing, 1g safener/g seeds to 10,000 g safener/g of seed may be applied.

Emulsifications are usually solutions of herbicides and/or safeners in water-immiscible or partially water-immiscible solvents as the carrier together with at least one surface active agent. Suitable solvents for the active ingredients of this invention include, but are not limited to, hydrocarbons and water-immiscible ethers, esters or ketones. The emulsification compositions generally contain from about 5% to about 95% herbicide and/or safener, from about 1% to about 50% surface active agent, and from about 4% to about 94% carrier, all percents being by weight based on the total weight of the composition. Emulsifications are especially useful in seed dressings and in applications in furrows. The emulsification may be applied to open furrows in which seeds have been sown. After covering the furrow, an herbicide may be applied separately.

The compounds useful in compositions of the present invention may be readily synthesized using techniques generally known to synthetic organic chemists. In general, the compounds may also be purchased commercially. The compositions may be prepared in known manner, for example by homogeneously mixing or grinding the active ingredients with other ingredients. Additional components may be admixed with the composition at any point during the process, including during and/or after any mixing step of the herbicide and safener.

When operating in accordance with the present invention, the desired plant is safened by contacting the plant with an antidotally effective amount of the composition of the present invention. The application of such herbicidal compositions to terrestrial plants can be carried out by conventional methods, e.g. power dusters, boom and hand sprayers and spray dusters. The compositions can also be applied from airplanes as a dust or a spray because of their effectiveness at low dosages. The application of herbicidal compositions to aquatic plants is usually carried out by spraying the compositions on the aquatic plants in the area where control of the aquatic plants is desired.

The herbicidal active substances and the above-mentioned safeners may be applied together (as a ready mix or by the tank mix method) or one after the other, in any desired sequence. The safeners of the present invention may be used for pre-treating seeds of the crop plants (dressing of seeds or seedlings) or incorporated in the soil before or after sowing. The safener may, however, also be applied by itself alone or together with the herbicide pre-emergence or post-emergence. Treatment with the safener may be carried out irrespective of the time of application of the herbicide. Treatment may also be carried out by simultaneous application of the herbicide and safener composition (e.g. as by the tank mix method).

The compositions of this invention are useful in planting seeds in a vegetated area without plowing or otherwise mechanically preparing a seed bed. The crop seed can be drill planted or otherwise seeded in combination with a prior or subsequent application of a composition of this invention to kill undesired growing vegetation. As the sprayed plants wither and die, they act as a mulch and moisture retaining layer in which the seeds can germinate or to keep the soil warm and moist.

### Experimental:

The following examples are put forth so as to provide those of ordinary skill in the art with a complete disclosure and description of how the compounds, compositions, articles, devices, and/-or methods claimed herein are made and evaluated, and are intended to be purely exemplary of the invention and are not intended to limit the scope of what the inventors regard as their invention. Efforts have been made to ensure accuracy with respect to numbers (e.g., amounts, temperature, etc.) but some errors and deviations should be accounted for. Unless indicated otherwise, percent is percent by weight given the component and the total weight of the composition, temperature is in °C or is at ambient temperature, and pressure is at or near atmospheric.

### Example 1

This experiment was performed using benzisothiazole compound I-1, which has the following chemical structure: 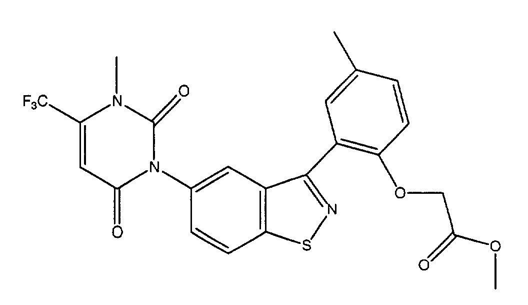 {4-Methyl-2-[5-(3-methyl-2,6-dioxo-4-trifluoromethyl-3,6-dihydro-2H-pyrimidin-1-yl)-benzo[d]isothiazol-3-yl]-phenoxy}-acetic acid methyl ester(Compound I-1)

Benzisothiazole compound I-1 (20 ppm) was applied alone and with safeners (20 and 200 ppm) pre-emergence ("PRE"). Applications with the safeners were in a tank mix with water as a sub-irrigation treatment. The results are shown in Table 1a as %GR, which is corn injury expressed as growth reduction.

**Table 1a.**

| I-1 plus various safeners sub-irrigated at 1X and 10X | | |
|---|---|---|
| **Compound(s) applied** | **% GR** [20 ppm] | **% GR** [200 ppm] |
| I-1 | 60 | 60 |
| I-1 + 4H-1-Benzopyran-4-acetic acid, 4-carboxy-2,3-dihydro- | 20 | 15 |
| I-1 + NAK | 40 | 15 |
| I-1 + dichlormid | 25 | 25 |
| I-1 + furilazole | 30 | 30 |
| I-1 + fluxofenim | 50 | 25 |
| I-1 + flurazole | 40 | 40 |

The experiment described above was repeated by applying the benzisothiazole compound I-1 (20 ppm) alone and with other safeners (200 ppm) PRE. Applications with the safeners were in a tank mix with water as a sub-irrigation treatment. The results are shown in Table 1b as %GR, which is corn injury expressed as growth reduction.

**Table 1b.**

| I-1 plus various safeners sub-irrigated at 10X | |
|---|---|
| **Compound(s) applied** | **% GR** |
| I-1 | 65 |
| I-1+ benzoic acid, 2-(carboxymethoxy)-5-[2-chloro-4-(trifluoromethyl)phenoxy]-, diammonium salt | 15 |
| I-1 + methyl 5-[2-chloro-4-(trifluoromethyl)phenoxy]-2-(2-methoxy-2-oxoethoxy)benzoate | 25 |
| I-1 + M-12874 | 25 |
| I-1 + phenoxathiine-4-carboxylic acid | 30 |
| I-1 + R-29148 | 30 |
| I-1 + cyometrinil | 35 |
| I-1 + acibenzolar-S-methyl | 40 |
| I-1 + methyl 1-benzothiophene-5-carboxylate 1,1-dioxide | 45 |
| I-1 + oxabetrinil | 45 |
| I-1 + daimuron | 45 |
| I-1 + thiobencarb | 50 |
| I-1 + cloquintocet-mexyl | 55 |
| I-1 + fenclorim | 55 |
| I-1 + fenchlorazole-ethyl | 60 |
| I-1 + MG-191 | 65 |
| I-1 + methanone, (2-butoxy-3,4-dimethoxy-6-methylphenyl)(2,6-dichlorophenyl)- | 65 |
| I-1 + piperonyl butoxide | 75 |
| I-1 + terbufos | 75 |

### Example 2

This experiment was performed using benzisothiazole compounds I-2 and I-3, which have the following chemical structures: 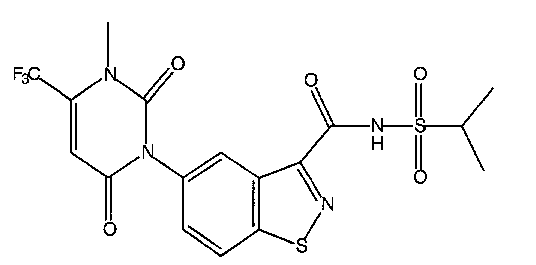 Propane-2-sulfonic acid [5-(3-methyl-2,6-dioxo-4-trifluoromethyl-3,6-dihydro-2H-pyrimidin-l-yl)-benzo[d]isothiazole-3-carbonyl]-amide(Compound I-2) 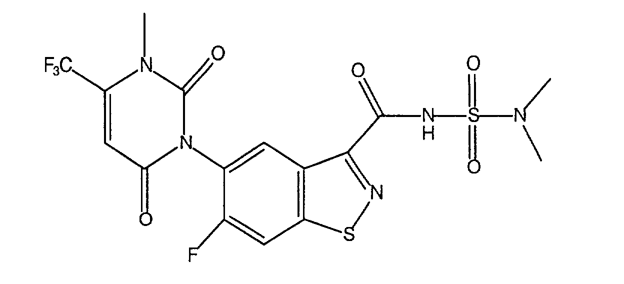 N,N-Dimethyl-sulfonamide [5-(3-methyl-2,6-dioxo-4-trifluoromethyl-3,6-dihydro-2H-pyrimidin-1-yl)-benzo-6- fluoro-[d]isothiazole-3-carbonyl]-amide(Compound I-3)

Benzisothiazole compound I-2 was applied PRE alone at 750g/ha and 500 g/ha. Benzisothiazole compound I-3 was applied PRE alone at 500g/ha and 250 g/ha. Both compounds were also applied PRE at the same rates in tank mixes with technical dichlormid at 750 g/ha and 500 g/ha and technical fuxofenim (4'-chloro-2,2,2-trifluoroacetophenone *O*-1,3-dioxolan-2-ylmethyloxime) at 300g/ha and 200 g/ha. Treatments were applied in water and the spray volume was 400 1/ha. Three Pioneer 3415 corn seeds were planted in a Plano loam soil in 5 inch standard round plastic pots. Experimental design was completely randomized with 3 replications per treatment. Corn injury ratings were taken 17 days after treatment ("DAT"). The results are shown in Table 2 as an average of three replications.

**Table 2:**

| Corn injury (%) with I-2 or I-3 tank mixed with safeners | | | | | | |
|---|---|---|---|---|---|---|
| Herbicide | Rate g/ha | No Safener Injury(%) | Dichlormid 750 g/ha Injury (%) | Dichlormid 500 g/ha Injury (%) | Fluxofenim 300g/ha Injury (%) | Fluxofenim 200 g/ha Injury (%) |
| I-2 | 750 | 70 | 67 | 70 | 75 | 73 |
| | 500 | 33 | 32 | 35 | 32 | 35 |
| | 0 | 0 | 0 | 0 | 0 | 0 |
| I-3 | 500 | 73 | 70 | 73 | 73 | 73 |
| | 250 | 68 | 32 | 32 | 50 | 53 |
| | 0 | 0 | 0 | 0 | 0 | 0 |

### Example 3

Benzisothiazole compound I-2 or benzisothiazole compound I-3 was applied to corn PRE using the same procedure as in example 2. The results are shown in table 3.

**Table 3:**

| Corn injury with I-2 or I-3 tank mixed with Benoxacor. | | | | |
|---|---|---|---|---|
| Herbicide | Rate g/ha | No Safener 0 g/ha | Benoxacor | |
| | | | 150 g/ha | 300 g/ha |
| I-2 | 600 | 43 | 43 | 43 |
| | 0 | 0 | 0 | 0 |
| I-3 | 250 | 50 | 50 | 50 |
| | 0 | 0 | 0 | 0 |
| Ratings are an average of three replications. | | | | |

### Example 4

Eighteen safeners were screened PRE in a tank mix with benzisothiazole compound I-2 or benzisothiazole compound I-3 (results in Table 4). The same procedure was used as in Example 2, except corn injury ratings were measured at various days after treatment.

**Table 4:**

| Corn injury with I-3 or I-2 tank mixed with safener | | | | | | | |
|---|---|---|---|---|---|---|---|
| Safener | Rate (g/ha) | I-3 (250 g/ha) | | | I-2 (500 g/ha) | | |
| | | 14 DAT | 20 DAT | 28 DAT | 14 DAT | 20 DAT | 28 DAT |
| None | | 75 | 70 | 67 | 60 | 50 | 53 |
| R-29148 | 250 | 27 | 23 | 35 | 17 | 13 | 15 |
| | 500 | 28 | 22 | 33 | 17 | 12 | 15 |
| NAK | 250 | 53 | 60 | 63 | 55 | 48 | 37 |
| | 500 | 52 | 62 | 65 | 48 | 50 | 35 |
| M-12874 | 250 | 30 | 30 | 52 | 23 | 22 | 12 |
| | 500 | 28 | 27 | 42 | 18 | 20 | 17 |
| Florazole | 250 | 40 | 45 | 52 | 22 | 27 | 20 |
| | 500 | 32 | 48 | 52 | 20 | 22 | 22 |
| Furilazole | 35 | 67 | 60 | 70 | 22 | 37 | 22 |
| | 70 | 47 | 47 | 55 | 22 | 35 | 15 |
| Acibenzolar-S-Methyl | 250 | 67 | 63 | 65 | 52 | 50 | 20 |
| | 500 | 70 | 62 | 65 | 40 | 47 | 23 |
| Cyometrinil | 150 | 50 | 63 | 67 | 40 | 45 | 37 |
| | 300 | 68 | 67 | 65 | 53 | 50 | 40 |
| MG-191 | 250 | 68 | 60 | 65 | 38 | 28 | 30 |
| | 200 | 75 | 58 | 65 | 30 | 28 | 22 |
| Fenchlorazole-ethyl | 250 | 73 | 65 | 68 | 62 | 50 | 43 |
| | 500 | 68 | 65 | 70 | 52 | 48 | 42 |
| Cloquintocet | 250 | 67 | 65 | 62 | 43 | 43 | 43 |
| | 500 | 75 | 67 | 68 | 58 | 47 | 37 |
| Oxabetrinil | 250 | 67 | 55 | 60 | 37 | 35 | 20 |
| | 500 | 70 | 67 | 63 | 48 | 42 | 40 |
| Fenclorim | 250 | 68 | 63 | 65 | 42 | 43 | 40 |
| | 500 | 72 | 63 | 62 | 45 | 37 | 28 |
| 4H-1-Benzopyran-4-acetic acid, 4-carboxy-2,3-dihydro- | 250 | 72 | 63 | 63 | 37 | 28 | 18 |
| | 500 | 70 | 62 | 68 | 25 | 23 | 28 |
| phenoxathiine-4-carboxylic acid | 250 | 62 | 53 | 63 | 55 | 40 | 27 |
| | 500 | 57 | 60 | 65 | 47 | 43 | 32 |
| methyl 5-[2-chloro-4-(trifluoromethyl)phenoxy]-2-(2-methoxy-2-oxoethoxy)benzoate | 250 | 67 | 55 | 68 | 32 | 30 | 27 |
| | 500 | 62 | 58 | 63 | 37 | 37 | 28 |
| benzoic acid, 2-(carboxymethoxy)-5-[2-chloro-4-(trifluoromethyl)phenoxy]-, diammonium salt | 250 | 70 | 63 | 70 | 28 | 37 | 28 |
| | 500 | 67 | 58 | 67 | 35 | 33 | 32 |
| Daimuron | 250 | 65 | 63 | 67 | 42 | 35 | 27 |
| | 500 | 42 | 42 | 65 | 33 | 33 | 30 |
| Piperonyl butoxide | 250 | 67 | 62 | 63 | 30 | 25 | 18 |
| | 500 | 70 | 65 | 67 | 47 | 48 | 25 |
| Untreated | 0 | 0 | 0 | 0 | 0 | 0 | 0 |

### Example 5

This experiment was performed to determine the effect of safeners on weed control. Low rates of I-3 (8 g/ha or 16 g/ha) were applied pre-emergence with moderate or high rates of the safeners (64 g/ha or 125 g/ha) to *Abutilon theophrasti* ("AB"), *Amaranthis rudis* ("AT"), *Ambrosia artemisiifolia* ("AM"), *Chenopodium album* ("CH"), *Ipomoea hederacea* ("IPO"), *Sidia spinosa* ("SID"), *Seteria virdis* ("SE"), *Solanium nigrum* ("SOL"), and *Xanthium strumarium* ("XAN") using the same procedure as in Example 2. The results are shown in Table 5a.

The experiment was repeated with I-3 applied post-emergence ("POST") to simulate no-till conditions. The herbicide was applied at low rates of 0.5 g/ha or 2 g/ha and three safeners at 64-250 g/ha using *Chenopodium album* ("CH"), *Ambrosia artemisiifolia ("AM"), Abutilon theophrasti* ("AB"), *Seteria virdis* ("SE"), *Echinochloa crus-galli* ("EC"), *Sorghum halepense* ("SOR"), *Ipomoea hederacea* ("IPO"), *Solanium nigrum* ("SOL"), and *Xanthium strumarium* ("XAN") and the same procedure The results are shown in Table 5b.

**Table 5a:**

| Effect of safeners on PRE weed control of herbicide compound I-3 | | | | | | | | | | | | |
|---|---|---|---|---|---|---|---|---|---|---|---|---|
| Herbicide | Rate Herb. (g/ha) | Safener | Rate Safen (g/ha) | Weed Control (%) | | | | | | | | |
| | | | | AB | AT | AM | CH | IPO | SE | SID | SOL | XAN |
| I-3 | 8 | None | 0 | 75 | 100 | 70 | 95 | 65 | 0 | 100 | 100 | 70 |
| | | R-29148 | 64 | 99 | 100 | 70 | 100 | 95 | 0 | 100 | 100 | 100 |
| | | | 125 | 100 | 100 | 70 | 100 | 80 | 0 | 98 | 100 | 45 |
| | | M-12874 | 64 | 80 | 90 | 75 | 100 | 85 | 0 | 100 | 100 | 100 |
| | | | 125 | 100 | 100 | 75 | 100 | 100 | 0 | 100 | 100 | 80 |
| | | flurazole | 64 | 100 | 100 | 75 | 100 | 80 | 0 | 98 | 100 | 100 |
| | | | 125 | 98 | 98 | 75 | 75 | 100 | 0 | 100 | 100 | 80 |
| | | furilazole | 35 | 94 | 100 | 75 | 100 | 80 | 0 | 100 | 100 | 60 |
| | | | 70 | 75 | 85 | 75 | 75 | 100 | 0 | 98 | 100 | 65 |
| | | | 140 | 100 | 100 | 75 | 100 | 60 | 0 | 100 | 100 | 65 |
| I-3 | 16 | None | 0 | 100 | 100 | 80 | 100 | 75 | 0 | 100 | 100 | 100 |
| | | R-29148 | 64 | 100 | 100 | 98 | 100 | 70 | 0 | 100 | 100 | 100 |
| | | | 125 | 99 | 100 | 100 | 100 | 85 | 0 | 100 | 100 | 100 |
| | | M-12874 | 64 | 100 | 100 | 85 | 90 | 100 | 0 | 100 | 100 | 100 |
| | | | 125 | 97 | 100 | 100 | 100 | 100 | 0 | 100 | 100 | 80 |
| | | flurazole | 64 | 100 | 100 | 80 | 100 | 100 | 0 | 100 | 100 | 100 |
| | | | 125 | 100 | 100 | 95 | 100 | 100 | 0 | 100 | 100 | 100 |
| | | furilazole | 35 | 100 | 100 | 85 | 100 | 98 | 0 | 100 | 100 | 80 |
| | | | 70 | 100 | 100 | 80 | 100 | 96 | 0 | 100 | 100 | 100 |
| | | | 140 | 95 | 95 | 100 | 100 | 95 | 0 | 100 | 100 | 90 |
| Untreated | 0 | | 0 | 0 | 0 | 0 | 0 | 0 | 0 | 0 | 0 | 0 |

**Table 5b:**

| Effect of safeners on POST weed control of herbicidal compound I-3 | | | | | | | | | | | | |
|---|---|---|---|---|---|---|---|---|---|---|---|---|
| Herbicide | Rate Herb . (g/ha) | Safener | Rate Safener (g/ha) | Weed Control (%) | | | | | | | | |
| | | | | CH | AM | AB | SET | EC | SOR | IPO | SOL | XAN |
| I-3 | 0.5 | None | 0 | 80 | 100 | 55 | 20 | 20 | 20 | 100 | 100 | 100 |
| | | R-29148 | 64 | 75 | 95 | 95 | 20 | 15 | 15 | 100 | 100 | 100 |
| | | | 125 | 75 | 95 | 95 | 20 | 25 | 15 | 100 | 100 | 100 |
| | | | 250 | 75 | 95 | 95 | 40 | 25 | 15 | 100 | 100 | 100 |
| | | M-12874 | 64 | 65 | 100 | 100 | 20 | 15 | 15 | 100 | 100 | 100 |
| | | | 125 | 75 | 100 | 100 | 25 | 15 | 15 | 100 | 100 | 100 |
| | | | 250 | 75 | 100 | 95 | 25 | 15 | 15 | 100 | 100 | 100 |
| | | furilazole | 35 | 50 | 85 | 100 | 25 | 20 | 20 | 100 | 100 | 100 |
| | | | 70 | 50 | 75 | 85 | 15 | 15 | 10 | 100 | 100 | 95 |
| | | | 140 | 60 | 60 | 75 | 10 | 10 | 5 | 100 | 95 | 100 |
| I-3 | 2.0 | None | 0 | 95 | 100 | 100 | 90 | 75 | 50 | 100 | 100 | 100 |
| | | R-29148 | 64 | 100 | 100 | 100 | 60 | 65 | 55 | 100 | 100 | 100 |
| | | | 125 | 100 | 100 | 100 | 90 | 65 | 65 | 100 | 100 | 100 |
| | | | 250 | 100 | 100 | 100 | 85 | 60 | 70 | 100 | 100 | 100 |
| | | M-12874 | 64 | 100 | 100 | 100 | 55 | 60 | 55 | 100 | 100 | 100 |
| | | | 125 | 85 | 100 | 100 | 55 | 50 | 45 | 100 | 100 | 100 |
| | | | 250 | 100 | 100 | 100 | 55 | 45 | 70 | 100 | 100 | 100 |
| | | furilazole | 35 | 100 | 100 | 100 | 70 | 60 | 60 | 100 | 100 | 100 |
| | | | 70 | 95 | 100 | 100 | 65 | 65 | 65 | 100 | 100 | 100 |
| | | | 140 | 95 | 100 | 100 | 35 | 65 | 65 | 100 | 100 | 100 |
| Untreated | 0 | | 0 | 0 | 0 | 0 | 0 | 0 | 0 | 0 | 0 | 0 |

### Example 6

This experiment was performed to determine compare the effectiveness of PRE and POST application to corn. I-3 was applied PRE at 125 g/ha and 250 g/ha and tank mixed with the desired safener at 32 g/ha, 64 g/ha, 125 g/ha and 250 g/ha. The results of corn injury at 12 DAT and 21 DAT are shown in Table 6a.

The experiment was repeated applying I-3 POST at 0.5 g/ha and 2.0 g/ha and tank mixed with the desired safener at various application rates. The results of corn injury at 12DAT are shown in Table 6b.

**Table 6a:**

| Effect of safeners on corn injury with herbicidal compound I-3 applied PRE. | | | | | |
|---|---|---|---|---|---|
| Herbicide | Herbicide Application Rate (g/ha) | Safener | Safener Application Rate (g/ha) | Injury (%) 12 DAT | Injury (%) 21 DAT |
| I-3 | 125 | None | 0 | 25 | 33 |
| | | R-29148 | 32 | 2 | 0 |
| | | | 64 | 2 | 0 |
| | | | 125 | 0 | 0 |
| | | | 250 | 0 | 0 |
| | | M-12874 | 32 | 17 | 10 |
| | | | 64 | 18 | 2 |
| | | | 125 | 3 | 0 |
| | | | 250 | 0 | 0 |
| | | flurazole | 32 | 7 | 0 |
| | | | 64 | 7 | 0 |
| | | | 125 | 5 | 0 |
| | | | 250 | 5 | 0 |
| | | furilazole | 32 | 5 | 0 |
| | | | 64 | 2 | 0 |
| | | | 125 | 2 | 0 |
| | | | 250 | 2 | 0 |
| I-3 | 250 | None | 0 | 62 | 63 |
| | | R-29148 | 32 | 38 | 37 |
| | | | 64 | 58 | 40 |
| | | | 125 | 20 | 25 |
| | | | 250 | 15 | 12 |
| | | M-12874 | 32 | 13 | 30 |
| | | | 64 | 17 | 28 |
| | | | 125 | 13 | 38 |
| | | | 250 | 13 | 32 |
| | | flurazole | 32 | 35 | 23 |
| | | | 64 | 30 | 25 |
| | | | 125 | 37 | 35 |
| | | | 250 | 25 | 32 |
| | | furilazole | 35 | 28 | 33 |
| | | | 70 | 28 | 40 |
| | | | 140 | 40 | 30 |
| Untreated | 0 | | 0 | 0 | 0 |

**Table 6b:**

| Effect of safeners on corn injury with herbicidal compound I-3 applied POST. | | | | |
|---|---|---|---|---|
| Herbicide | Herb. App. Rate (g/ha) | Safener | App. Safener Rate (g/ha) | Injury (%) 12 DAT |
| I-3 | 0.5 | None | 0 | 25 |
| | | R-29148 | 125 | 25 |
| | | | 250 | 25 |
| | | furilazole | 35 | 27 |
| | | | 70 | 27 |
| I-3 | 2.0 | None | 0 | 88 |
| | | R-29148 | 125 | 78 |
| | | | 250 | 75 |
| | | furilazole | 35 | 77 |
| | | | 70 | 82 |
| Untreated | 0 | | 0 | 0 |

Throughout this application, various publications are referenced. The disclosures of these publications in their entireties are hereby incorporated by reference into this application for all purposes.

It will be apparent to those skilled in the art that various modifications and variations can be made in the present invention without departing from the scope or spirit of the invention. Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

## Claims

1. An herbicidal composition comprising:
a) an herbicidally effective amount of a benzisothiazole herbicide of the formula (I): 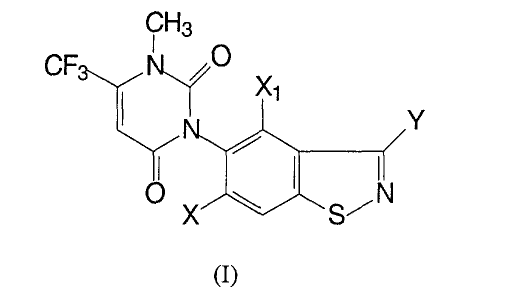 wherein
X and X₁ are each independently hydrogen or F;
X₂ is O or NR₂;
X₃ is O or S;
Y is R₁, COR₁, or COX₂R₁;
R₁ is hydrogen,
C₁-C₄ alkyl, C₂-C₄ alkenyl, C₂-C₄ alkynyl, or C₁-C₄ heteroalkyl optionally substituted with SO₂R₃, cyano, nitro, halogen, aryl, X₃R₆, or C₃-C₇ cycloalkyl,
C₃ -C₇ cycloalkyl or C₃-C₇ heterocycle optionally substituted with cyano, nitro, halogen, aryl, X₃R₆, C₁ -C₄ alkyl, C₂-C₄ alkenyl, C₂ -C₄ alkynyl, or C₁-C₄ heteroalkyl, or
aryl optionally substituted with cyano, nitro, halogen, C₃ -C₇ cycloalkyl, C₃-C₇ heterocycle, hydroxyl, C₁ -C₄ alkyl, C₂ -C₄ alkenyl, C₂ -C₄ alkynyl, C₁₋C₄ heteroalkyl, or X₃R₆;
R₂ is hydrogen, SO₂R₃,
C₁ -C₄ alkyl, C₂ -C₄ alkenyl, C₂ -C₄ alkynyl, or C₁ -C₄ heteroalkyl optionally substituted with cyano, nitro, halogen, aryl, hydroxyl, or C₃ -C₇ cycloalkyl,
C₃ -C₇ cycloalkyl or C₃ -C₇ heterocycle optionally substituted with cyano, nitro, halogen, aryl, hydroxyl, C₁ -C₄ alkyl, C₂-C₄ alkenyl, C₂ -C₄ alkynyl, or C₁-C₄ heteroalkyl, or
aryl optionally substituted with cyano, nitro, halogen, C₃ -C₇ cycloalkyl, C₃ -C₇ heterocycle, hydroxyl, C₁ -C₄ alkyl, C₂ -C₄ alkenyl, C₂ -C₄ alkynyl or C₁-C₄ heteroalkyl;
R₃ is hydrogen, NR₄R₅,
C₁-C₁₂ alkyl, C₂ -C₈ alkenyl, C₂ -C₈ alkynyl, or C₁ -C₁₂ heteroalkyl optionally substituted with cyano, nitro, halogen, aryl, hydroxyl, or C₃ -C₇ cycloalkyl, C₃ -C₇ cycloalkyl or C₃ -C₇ heterocycle optionally substituted with cyano, nitro, halogen, aryl, hydroxyl, C₁ -C₆ alkyl, C₂-C₆ alkenyl, C₂ -C₆ alkynyl, or C₁-C₆ heteroalkyl, or
aryl optionally substituted with cyano, nitro, halogen, C₃ -C₇ cycloalkyl, C₃-C₇ heterocycle, hydroxyl, C₁ -C₆ alkyl, C₂ -C₆ alkenyl, C₂ -C₆ alkynyl or C₁-C₆ heteroalkyl;
R₄ and R₅ are each independently hydrogen, pyrimidine,
C₁-C₈ alkyl, C₂ -C₈ alkenyl, C₂ -C₈ alkynyl, or C₁ -C₈ heteroalkyl optionally substituted with cyano, nitro, halogen, aryl, hydroxyl, or C₃ -C₇ cycloalkyl,
C₃ -C₇ cycloalkyl or C₃ -C₇ heterocycle optionally substituted with cyano, nitro, halogen, aryl, hydroxyl, C₁-C₄ alkyl, C₂-C₄ alkenyl, C₂-C₄ alkynyl, or C₁₋C₄ heteroalkyl;
aryl optionally substituted with cyano, nitro, halogen, C₃ -C₇ cycloalkyl, C₃-C₇ heterocycle, hydroxyl, C₁ -C₄ alkyl, C₂ -C₄ alkenyl, C₂ -C₄ alkynyl or C₁-C₄ heteroalkyl; or
when R₄ and R₅ are taken together with the nitrogen to which they are attached they form a C₂-C₁₂ membered monocyclic or fused bicyclic heterocycle;
R₆ is hydrogen,
C₁-C₂₀ alkyl or C₂-C₂₀ alkenyl optionally substituted with one C₁-C₆ alkoxy, CO₂R₇, (CO)R₈, C(O)NR₉R₁₀ or C(O)NHOR₁₁;
R₇ is hydrogen,
C₁-C₂₀ alkyl, C₁-C₁₅ haloalkyl, C₃-C₈ cycloalkyl, C₃-C₈ halocycloalkyl, C₂-C₂₀ alkenyl, C₃-C₁₅ haloalkenyl,
C₅-C₈ cycloalkenyl, C₃-C₂₀ alkynyl, or C₃-C₂₀ haloalkynyl optionally substituted aryl, pyridyl, furyl, thienyl, an alkali metal, alkaline earth metal, manganese, copper, zinc, cobalt, silver, nickel, ammonium, or organic ammonium cation;
R₈ is hydrogen, C₁-C₈ alkyl, C₁-C₈ haloalkyl, C₃-C₈ cycloalkyl, C₂-C₆ alkenyl, or
optionally substituted aryl, pyridyl, thienyl, furnyl, or pyrimidyl;
R₉ and R₁₁ are each independently hydrogen, C₁-C₈ alkyl, C₃-C₈ cycloalkyl, C₂-C₆ alkenyl, C₁-C₈ haloalkyl, C₃-C₈ alkynyl, or optionally substituted aryl; and
R₁₀ is hydrogen, SO₂R₃, C₁-C₈ alkyl, C₃-C₈ cycloalkyl,
C₂-C₆ alkenyl, C₁-C₈ haloalkyl, C₃-C₈ alkynyl, or optionally substituted aryl;
or an agronomically acceptable salt or ester thereof and
b) an antidotally effective amount of safener.

2. The composition of claim 1, wherein formula (I):
Y is R₁ or COX₂R₁;
X₂ is NR₂;
R₁ is SO₂R₃ or aryl substituted with C₁-C₄ alkyl and C₁-C₄ heteroalkyl;
R₂ is hydrogen or C₁-C₄ alkyl unsubstituted or substituted with cyano, nitro, halogen, aryl, hydroxyl, or C₃ -C₇ cycloalkyl;
R₃ is NR₄R₅, C₁ -C₁₂ alkyl , or C₁ -C₁₂ heteroalkyl, wherein the alkyl, or heteroalkyl is unsubstituted or substituted with cyano, nitro, halogen, aryl, hydroxyl, or C₃ -C₇ cycloalkyl; and
R₄ and R₅ are each independently hydrogen or C₁-C₈ alkyl unsubstituted or substituted with cyano, nitro, halogen, aryl, hydroxyl, or C₃ -C₇ cycloalkyl.

3. The composition of claim 1, wherein the benzisothiazole herbicide of formula (I) is
{4-methyl-2-[5-(3-methyl-2,6-dioxo-4-trifluoromethyl-3,6-dihydro-2H-pyrimidin-l-yl)-benzo[d]isothiazol-3-yl]-phenoxy}-acetic acid methyl ester; propane-2-sulfonic acid [5-(3-methyl-2,6-dioxo-4-trifluoromethyl-3,6-dihydro-2H-pyrimidin-1-yl)-benzo[d]isothiazole-3-carbonyl]-amide; N,N-dimethylsulfamoyl 3-[6-fluoro-5-(3,6-dihydro-2,6-dioxo-3-methyl-4-trifluoromethyl-2H-pyrimidin-l-yl)benzo[d]isothiazole] carbonamide, 6-fluoro-3-(methoxymethyl)-5(3,6-dihydro-2,6-dioxo-3-methyl-4-trifluoromethyl-2H-pyrimidin-1-yl)benzo[d]isothiazole, or 3-(1,3-dioxolan-2-yl)-6-fluoro-5-(3,6-dihydro-2,6-dioxo-3-methyl-4-trifluoromethyl-2H-pyrimidin-l-yl)benzo[d]isothiazole.

4. The composition of claim 3, wherein the safener is M-12874; R-29148; furilazole; flurazole; benoxacor; acetochlor; fluxofenim; dichlormid; oxabetrinil; cyometrinil; fenclorim; MG 191; fenchlorazole-ethyl; cloquintocet-mexyl; TI-35; AD 67; mefenpyr-diethyl; dicyclonon; dietholate; isoxadifen; mephenate; DKA-24; NAK; phenoxathiine-4-carboxylic acid;
4H-l-Benzopyran-4-acetic acid, 4-carboxy-2,3-dihydro-; methyl 5-[2-chloro-4-(trifluoromethyl)phenoxy]-2-(2-methoxy-2-oxoethoxy)benzoate; benzoic acid, 2-(carboxymethoxy)-5-[2-chloro-4-(trifluoromethyl)phenoxy]-, diammonium salt; methanone, (2-butoxy-3,4-dimethoxy-6-methylphenyl)(2,6-dichlorophenyl)-; or methyl 1-benzothiophene-5-carboxylate 1,1-dioxide.

5. The composition of claim 3, wherein the safener is M-12874, R-29148, furilazole, furilazole, flurazole, benoxacor, acetochlor, or a combination thereof.

6. The composition of claim 5, further comprising: metolachor, piperonyl butoxide, terbufos, thiobencarb, daimuron, acibenzolar-S-methyl, dimethenamid-P, or a combination thereof.

7. The composition of claim 5, further comprising a fertilizer, a phytotoxicant, a plant growth regulator, a pesticide, an antifoaming agent, a thickening agent, an antimicrobial agent, an antioxidant a buffer, an emulsifying agent, a wetting agent, a dye, a perfume, a stabilizing agent, an antifreezing agent, or a combination thereof.

8. A method of safening a desired plant from injury caused by an herbicidally effective amount of a benzisothiazole herbicide of the formula (I): 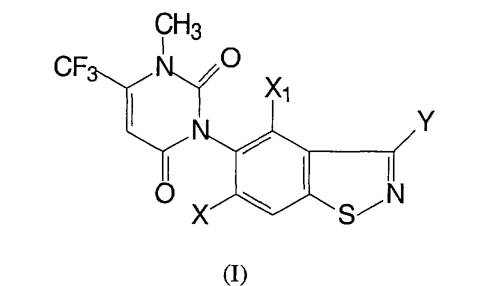 wherein
X and X₁ are each independently hydrogen or F;
X₂ is O or NR₂;
X₃ is O or S;
Y is R₁, COR₁, or COX₂R₁;
R₁ is hydrogen,
C₁-C₄ alkyl, C₂-C₄ alkenyl, C₂-C₄ alkynyl, or C₁-C₄ heteroalkyl optionally substituted with SO₂R₃, cyano, nitro, halogen, aryl, X₃R₆, or C₃-C₇ cycloalkyl,
C₃ -C₇ cycloalkyl or C₃-C₇ heterocycle optionally substituted with cyano, nitro, halogen, aryl, X₃R₆, C₁ -C₄ alkyl, C₂-C₄ alkenyl, C₂ -C₄ alkynyl, or C₁-C₄ heteroalkyl, or
aryl optionally substituted with cyano, nitro, halogen, C₃ -C₇ cycloalkyl, C₃-C₇ heterocycle, hydroxyl, C₁ -C₄ alkyl, C₂ -C₄ alkenyl, C₂ -C₄ alkynyl, C₁-C₄ heteroalkyl, or X₃R₆;
R₂ is hydrogen, SO₂R₃,
C₁ -C₄ alkyl, C₂ -C₄ alkenyl, C₂ -C₄ alkynyl, or C₁ -C₄ heteroalkyl optionally substituted with cyano, nitro, halogen, aryl, hydroxyl, or C₃ -C₇ cycloalkyl,
C₃ -C₇ cycloalkyl or C₃ -C₇ heterocycle optionally substituted with cyano, nitro, halogen, aryl, hydroxyl, C₁ -C₄ alkyl, C₂-C₄ alkenyl, C₂ -C₄ alkynyl, or C₁-C₄ heteroalkyl, or
aryl optionally substituted with cyano, nitro, halogen, C₃ -C₇ cycloalkyl, C₃ -C₇ heterocycle, hydroxyl, C₁ -C₄ alkyl, C₂ -C₄ alkenyl, C₂ -C₄ alkynyl or C₁-C₄ heteroalkyl;
R₃ is hydrogen, NR₄R₅,
C₁ -C₁₂ alkyl, C₂ -C₈ alkenyl, C₂ -C₈ alkynyl, or C₁ -C₁₂ heteroalkyl optionally substituted with cyano, nitro, halogen, aryl, hydroxyl, or C₃ -C₇ cycloalkyl, C₃ -C₇ cycloalkyl or C₃ -C₇ heterocycle optionally substituted with cyano, nitro, halogen, aryl, hydroxyl, C₁ -C₆ alkyl, C₂-C₆ alkenyl, C₂ -C₆ alkynyl, or C₁-C₆ heteroalkyl, or
aryl optionally substituted with cyano, nitro, halogen, C₃ -C₇ cycloalkyl, C₃-C₇ heterocycle, hydroxyl, C₁ -C₆ alkyl, C₂ -C₆ alkenyl, C₂ -C₆ alkynyl or C₁-C₆ heteroalkyl;
R₄ and R₅ are each independently hydrogen, pyrimidine,
C₁-C₈ alkyl, C₂ -C₈ alkenyl, C₂ -C₈ alkynyl, or C₁ -C₈ heteroalkyl optionally substituted with cyano, nitro, halogen, aryl, hydroxyl, or C₃ -C₇ cycloalkyl,
C₃ -C₇ cycloalkyl or C₃ -C₇ heterocycle optionally substituted with cyano, nitro, halogen, aryl, hydroxyl, C₁-C₄ alkyl, C₂-C₄ alkenyl, C₂-C₄ alkynyl, or C₁-C₄ heteroalkyl;
aryl optionally substituted with cyano, nitro, halogen, C₃ -C₇ cycloalkyl, C₃-C₇ heterocycle, hydroxyl, C₁ -C₄ alkyl, C₂ -C₄ alkenyl, C₂ -C₄ alkynyl or C₁-C₄ heteroalkyl; or
when R₄ and R₅ are taken together with the nitrogen to which they are attached they form a C₂-C₁₂ membered monocyclic or fused bicyclic heterocycle;
R₆ is hydrogen,
C₁-C₂₀ alkyl or C₂-C₂₀ alkenyl optionally substituted with one C₁-C₆ alkoxy, CO₂R₇, (CO)R₈, C(O)NR₉R₁₀ or C(O)NHOR₁₁;
R₇ is hydrogen,
C₁-C₂₀ alkyl, C₁-C₁₅ haloalkyl, C₃-C₈ cycloalkyl, C₃-C₈ halocycloalkyl, C₂-C₂₀ alkenyl, C₃-C₁₅ haloalkenyl,
C₅-C₈ cycloalkenyl, C₃-C₂₀ alkynyl, or C₃-C₂₀ haloalkynyl optionally substituted aryl, pyridyl, furyl, thienyl, an alkali metal, alkaline earth metal, manganese, copper, zinc, cobalt, silver, nickel, ammonium, or organic ammonium cation;
R₈ is hydrogen, C₁-C₈ alkyl, C₁-C₈ haloalkyl, C₃-C₈ cycloalkyl, C₂-C₆ alkenyl, or
optionally substituted aryl, pyridyl, thienyl, furnyl, or pyrimidyl;
R₉ and R₁₁ are each independently hydrogen, C₁-C₈ alkyl, C₃-C₈ cycloalkyl, C₂-C₆ alkenyl, C₁-C₈ haloalkyl, C₃-C₈ alkynyl, or optionally substituted aryl; and
R₁₀ is hydrogen, SO₂R₃, C₁-C₈ alkyl, C₃-C₈ cycloalkyl, C₂-C₆ alkenyl, C₁-C₈ haloalkyl, C₃-C₈ alkynyl, or optionally substituted aryl.
or an agronomically acceptable salt or ester thereof; wherein the method comprises contacting the desired plant or area intended for crop plants with an antidotally effective amount of a safener.

9. The method of claim 8, wherein formula (I):
Y is R₁ or COX₂R₁;
X₂ is NR₂;
R₁ is SO₂R₃ or aryl substituted with C₁-C₄ alkyl and C₁-C₄ heteroalkyl;
R₂ is hydrogen or C₁-C₄ alkyl unsubstituted or substituted with cyano, nitro, halogen, aryl, hydroxyl, or C₃ -C₇ cycloalkyl;
R₃ is NR₄R₅, C₁ -C₁₂ alkyl , or C₁ -C₁₂ heteroalkyl, wherein the alkyl, or heteroalkyl is unsubstituted or substituted with cyano, nitro, halogen, aryl, hydroxyl, or C₃ -C₇ cycloalkyl; and
R₄ and R₅ are each independently hydrogen or C₁-C₈ alkyl unsubstituted or substituted with cyano, nitro, halogen, aryl, hydroxyl, or C₃ -C₇ cycloalkyl.

10. The method of claim 8, wherein the benzisothiazole herbicide of formula (I) is {4-methyl-2-[5-(3-methyl-2,6-dioxo-4-trifluoromethyl-3,6-dihydro-2H-pyrimidin-1-yl)-benzo[d]isothiazol-3-yl]-phenoxy}-acetic acid methyl ester; propane-2-sulfonic acid [5-(3-methyl-2,6-dioxo-4-trifluoromethyl-3,6-dihydro-2H-pyrimidin-1-yl)-benzo[d]isothiazole-3-carbonyl]-amide, N,N-dimethylsulfamoyl 3-[6-fluoro-5-(3,6-dihydro-2,6-dioxo-3-methyl- 4-trifluoromethyl-2H-pyrimidin-1-yl)benzo[d]isothiazole] carbonamide, or 6-fluoro-3-(methoxymethyl)-5(3,6-dihydro- 2,6-dioxo-3-methyl-4-trifluoromethyl-2H-pyrimidin-1-yl)benzo[d]isothiazole, or 3-(1,3-dioxolan-2-yl)-6- fluoro-5-(3,6-dihydro-2,6-dioxo-3-methyl-4-trifluoromethyl-2H-pyrimidin-1-yl)benzo[d]isothiazole.

11. The method of claim 10, wherein the safener is M-12874; R-29148; furilazole; flurazole; benoxacor; acetochlor; fluxofenim; dichlormid; oxabetrinil; cyometrinil; fenclorim; MG 191; fenchlorazole-ethyl; cloquintocet-mexyl; TI-35; AD 67; mefenpyr-diethyl; dicyclonon; dietholate; isoxadifen; mephenate; DKA-24; NAK; phenoxathiine-4-carboxylic acid; 4H-1-Benzopyran-4-acetic acid, 4-carboxy-2,3-dihydro-; methyl 5-[2-chloro-4-(trifluoromethyl)phenoxy]-2-(2-methoxy-2-oxoethoxy)benzoate; benzoic acid, 2-(carboxymethoxy)-5-[2-chloro-4-(trifluoromethyl)phenoxy]-, diammonium salt; methanone, (2-butoxy-3,4-dimethoxy-6-methylphenyl)(2,6-dichlorophenyl)-; or methyl 1-benzothiophene-5-carboxylate 1,1-dioxide.

12. The method of claim 10, wherein the safener is M-12874, R-29148, furilazole, furilazole, flurazole, benoxacor, acetochlor, or a combination thereof.

13. The method of claim 8, wherein the desired plant is corn or a cereal crop.

14. The method of claim 8, wherein the safener is applied pre-emergence.

15. The method of claim 8, wherein the method further comprises contacting the desired plant or area intended for crop plants with the benzisothiazole herbicide.

16. The method of claim 15, wherein the benzisothiazole herbicide is applied at a rate of 0.1 g/ha to about 500 g/ha and the safener is applied at a rate of about 10 g/ha to about 500 g/ha.

17. The method of claim 15, wherein the benzisothiazole herbicide and the safener are applied as a composition.

18. The method of claim 17, wherein the composition is applied at a rate of about 0.5 g/ha to about 250 g/ha.

19. The method of claim 8, wherein the method further comprises contacting the desired plant or area intended for crop plants with metolachor, piperonyl butoxide, terbufos, thiobencarb, daimuron, acibenzolar-S-methyl, dimethenamid-P, or a combination thereof.

20. The method of claim 19, wherein the method further comprises contacting the desired plant or area intended for crop plants with the benzisothiazole herbicide.
